# EUROPEAN PATENT APPLICATION

(11) **EP 2 921 750 A1**
(43) Date of publication of application: **23.09.2015**
(21) Application number: 14160498.3
(22) Date of filing: 18.03.2014
(51) Int. Cl.: F16K 5/04

(54) **A valve**

(71) Applicant: LK Armatur AB, 254 66 Helsingborg (SE)
(72) Inventor: Carlin, Franco, 38123 Villazzano - Trento (IT); Bencell, Laszlo, 265 38 Åstorp (SE)
(74) Representative: Grönlund, Tim Linus Wilhelm

(57) **Abstract**

A valve (100; 200) comprises an internally hollow housing (102; 202) allowing fluid communication through an opening (108a, 108b; 208a, 208b), wherein the cross-sectional area of the opening (108a, 108b; 208a, 208b) is arranged to be regulated for controlling fluid communication through the valve. The valve (100; 200) comprises a valve seat (110; 210), which defines an edge of the opening (108a, 108b; 208a, 208b) to be regulated; an obturator (113; 213) of rigid material, which comprises a plug element (116; 216) forming an axis-symmetrical shape and an obturator opening (120, 120b; 220), wherein the obturator (113; 213) is rotatable so that the obturator opening (120a, 120b; 220) is rotated in relation to the opening (108a, 108b; 208a, 208b) to be regulated; and a valve seal (122; 234) of an elastomeric material, which is arranged between the valve seat (110; 210) and the obturator (113; 213); wherein the obturator opening (120a, 120b; 220) and the valve seat (110; 210) together form a fluid opening (126) and which is shaped such that fluid flow through the fluid opening (126) is less dependent of angular position of the obturator (113; 213) than a linear characteristic fluid opening during the initial rotation of the obturator (113; 213) from the closed position.

## Description

### Field of the Invention

The present invention relates to a valve for controlling fluid communication between at least two ports and to a method for regulating fluid passage through the valve.

### Background of the Invention

A valve provides control of a flow of a fluid. The valve may inhibit the fluid flow or may control the flow rate of the fluid passing through the valve.

The valve may comprise an internally hollow housing having ports for providing inlet and outlet of fluid. Pipes, fittings or accessories may be connected to the ports for transporting fluid to and from the valve. The housing has an opening to each port and the cross-sectional area of the opening may be regulated for controlling fluid flow to or from the port.

An obturator may be arranged in the housing and may be used for regulating the area of the opening to a port. The obturator may be provided with a hollow, axis-symmetrically shaped plug element that provides an obturator opening, which may be positioned in relation to the opening to a port in order to allow fluid communication between the port and an inner space of the hollow plug element. The plug element may be positioned such that two or more obturator openings are in communication with a respective opening to a port, such that fluid communication between the ports is allowed. The obturator with the plug element may be rotated in the housing in order to change the position of obturator opening(s) in relation to the opening(s) to the ports such that fluid communication is regulated.

EP 1 988 314 discloses a valve comprising an internally hollow main body and a closure member rotatably in engagement inside the main body so as to rotate between an open position at which it allows passage of fluid from an inlet opening to an outlet opening and a closed position at which it inhibits passage of fluid between the inlet opening and the outlet opening. The valve in EP 1 988 314 is adapted to move the closure member between a completely open position and a completely closed position. With the valve in EP 1 988 314 it may be difficult to provide accurate control of different flow rates, at least over a wide range between the completely open position and the completely closed position.

Hence, it may be desired to provide a valve, that facilitates more accurate control of fluid flow through the valve.

For ball valves, it is known that an insert may be used in order to control fluid flow through the valve. WO 2011/133117 discloses a valve having an insert such that the desired regulating characteristic may be provided. A rotating valve shutoff part comprising the valve insert can be rotated in a valve housing. The valve shutoff part may be sealed by means of plastic gaskets. This produces high torques and premature wearing of the gasket which lead to internal leakages. Another type of ball valve is shown in WO 00/37838, wherein a valve characteristic is controlled by an insert in the port. The sealing is provided by a hard material part which shows the same above-mentioned disadvantages as in WO 2011/133117.

### Summary of the Invention

It is an object of the invention to at least partly overcome the above problems. It is another object of the invention to provide a valve with desired characteristics of regulating fluid flow through the valve. It is yet another object of the invention to provide a valve that is tight on at least one port in a closed position.

These and other objects of the invention may at least partly be met by means of the invention as defined by the independent claims.

According to a first aspect of the invention, a valve is provided. The valve comprises: an internally hollow housing allowing fluid communication between at least two ports of the housing, wherein the housing has an opening to each port and wherein the cross-sectional area of at least one opening is arranged to be regulated for controlling fluid communication through the valve; a valve seat, which defines an edge of an opening of the housing to be regulated; an obturator, which is formed from a rigid material and which comprises a plug element having a wall, wherein the obturator with the plug element is rotatable in relation to the opening of the housing to be regulated so that the wall of the plug element defines an axis-symmetrical rotational volume as the obturator is rotated and at least one obturator opening which is rotated in relation to the opening to be regulated as the obturator is rotated; and a valve seal, which is arranged between the valve seat and the obturator in contact with the valve seat and with the obturator, wherein the valve seal is formed from an elastomeric material; wherein the obturator opening and the valve seat together form a fluid opening and the obturator is rotatable and placeable in any position between a fully open position in which a largest fluid opening is formed and a closed position in which the opening of the housing to be regulated is obstructed by the wall of the plug element, and wherein the valve seat and the obturator opening are shaped such that a desired regulation characteristic of the fluid opening is obtained, wherein fluid flow through the fluid opening is less dependent of angular position of the obturator during initial rotation of the obturator from the closed position than a linear characteristic fluid opening.

The valve provides an obturator that is formed from a rigid material and a valve seal formed from an elastomeric material which is arranged between the valve seat and the obturator in contact with the valve seat and with the obturator. This implies that the elastomeric material of the valve seal allows a deformation in the material so that the obturator may be rotated while a contact may be maintained between the obturator and a surrounding structure of the housing via the valve seal. Simultaneously, the valve seal may form a tight and sealing contact to the obturator such that leakage between the obturator and the housing may be prevented at least when the obturator is in its closed position.

The valve may therefore be properly sealed in the closed position. Further, the sealing may be provided, without requiring a large friction to be overcome when the obturator is to be rotated. Hence, the valve may require low energy consumption in controlling the valve. Also, because of the elastomeric nature of the material used for the seal, wear on the parts of the valve may be minimized, since there is no large friction in the rotation of the obturator, whereby the valve may have a long lifetime. Also, the contact of the rigid obturator with an elastomeric material may prevent jamming when the valve is held in a constant position for a long time.

The valve is arranged to provide good control of the fluid flow through the opening to be regulated. In this regard, the valve may be arranged to allow some extent of controlled leakage through the opening to be regulated in the closed position. Hence, in the closed position of the obturator, the plug element may be arranged to obstruct fluid flow but may intentionally not completely inhibit the fluid flow. For instance, it may be desired that venting is provided through the opening to be regulated in the closed position of the obturator. Therefore, the plug element may e.g. be intentionally provided with a small venting hole that allows a controlled leakage of fluid through the opening to be provided in the closed position.

When the obturator is rotated, the obturator opening is rotated in relation to the valve seat. This implies that when the obturator is rotated from a closed position, an edge of the obturator opening is gradually entered further into an opening formed by the valve seat. The relation between the shape of the obturator opening and the valve seat will determine at what extent the area of the fluid opening increases with an angular rotation of the obturator. The relation between the cross-sectional area of the fluid opening and the angular rotation of the obturator defines the regulation characteristic of the valve.

As used herein, the term *regulation characteristic"* should be construed as a relationship of fluid flow through an opening of the housing to be regulated in dependence of an angular position of the obturator, wherein the pressure drop through the valve is constant. The angular position of the obturator controls the size of a cross-sectional area of the fluid opening, which determines the fluid flow through the opening to be regulated. The obturator is rotatable between a closed position, wherein no or minimum fluid flow is allowed, and a fully open position, wherein a maximum fluid flow is allowed. The shape of a graph relating the percentage referred to the maximum fluid flow to the percentage of angular rotation between the closed and the fully open position may illustrate the regulation characteristic of the valve. A linear characteristic is provided when the shape of the graph is linear from the closed position to the fully open position.

According to the invention, the valve seat and the obturator opening are shaped such that a regulation characteristic of the fluid opening is obtained, wherein fluid flow through the fluid opening is less dependent of angular position of the obturator during initial rotation of the obturator from the closed position than a linear characteristic fluid opening. In other words, the fluid flow through the fluid opening for a given angle is smaller than the fluid flow would be for a fluid opening having a linear characteristic. This implies that during initial rotation of the obturator, fluid flow through the fluid opening is only changed to a small extent by an angular rotation of the obturator. Hence, for small fluid flows, the desired fluid flow may be very accurately set, since the obturator needs to be rotated through a relatively large angle for setting the fluid flow.

In particular, the regulation characteristic of the fluid opening implies that requirements placed on the accuracy of an actuator for controlling the angular position of the obturator are less severe. Instead, the design of the valve provides a regulation characteristic that allows accurate control of the fluid flow by means of relatively large changes in the angular position of the obturator during its initial rotation from the closed position. This may also enable an actuator quickly finding a desired angular position of the obturator and not needing to rotate the obturator slightly back and forth in order to settle at the correct angular position, thus preventing instability of the regulating system where the valve object of the invention is installed.

The fluid opening may be shaped in such manner that when the obturator is rotated in a rotational direction for opening the fluid opening a trailing and/or leading edge of the fluid opening in the rotational direction of the obturator provides an increase in the area of the fluid opening, which controls the regulation characteristic of the valve. The shape of the trailing and/or leading edges of the fluid opening may be designed by designing the shape of the obturator opening and/or the shape of the valve seat. In particular, the edges of the obturator opening and the edges of the valve seat perpendicular to the rotational direction of the obturator may be designed to form the desired shape of the fluid opening.

The obturator opening and the valve seat may be shaped such that a rate of increase of an area of the fluid opening as a function of an angular position of the obturator is monotonically increasing during initial rotation of the obturator from the closed position. Such a relationship of the area of the fluid opening to the angular position of the obturator provides that, for initial rotation of the obturator from the closed position, the fluid flow through the fluid opening will be less dependent of an angular position of the obturator than a linear characteristic fluid opening. This increases the accuracy of the control of the fluid flow through the opening of the housing to be regulated in dependence of an angular position of the obturator and helps in preventing instability of the regulating system where the valve object of the invention is installed.

Initial rotation of the obturator may constitute an angular rotation through approximately half an angle between the closed position and the fully open position of the obturator. This implies that the fluid flow through the fluid opening for any given angle is smaller than for a linear characteristic fluid opening during rotation of approximately the first half of the angle between the closed position and the fully open position. This may enable fluid flow to be more accurately controlled during rotation of the obturator through approximately the first half of the angle between the closed position and the fully open position than during rotation through the second half.

According to an embodiment, an edge of the obturator opening is shaped to provide the regulation characteristic of the fluid opening. This implies that the obturator opening may be adapted to a regular shape of the valve seat in order to provide a desired regulation characteristic. For instance, the valve seat may be arranged to provide as large opening as possible for the opening of the housing to be regulated. The obturator opening may further be shaped to provide the desired characteristic.

According to another embodiment, the valve seat is shaped to provide the regulation characteristic of the fluid opening. Hence, the regulation characteristic of the valve may alternatively be provided by the shape of the valve seat. As a further alternative, the combined shape of the valve seat and the obturator opening may provide the regulation characteristic of the fluid opening.

According to an embodiment, the plug element defines a cylindrical rotational volume as the obturator is rotated. This implies that the size of the rotational volume is constant along a rotation axis of the obturator, which may facilitate forming of the valve, having a regularly shaped housing and a valve seal that is in contact with a cylindrically shaped element.

As used herein, the term *"valve seat"* is to be construed as a structure in the valve that defines the edge of the opening of the housing to be regulated. The housing may comprise a structure that provides the edge of the opening of the housing to be regulated. Hence, the valve seat may be formed by such a structure.

For instance, the valve seat may be formed by an inner wall in the port. As an alternative, a structure may be mounted in the port in order to define the valve seat. Hence, the valve seat may be formed by an insert in the port. As a further alternative, the valve seat may be defined by a specific structure in the valve seal. The valve seal may thus provide dual functions in providing a sealing of the obturator in the port so that no leakage occurs in the closed position and in defining an edge of the opening of the port to be regulated.

According to an embodiment, the valve seal is arranged to be integrated in the obturator. This implies that the obturator and the valve seal may be provided as an integral component, which may be easily mounted in the housing. According to another embodiment, the valve seal is arranged to be integrated in a structure of the housing forming the valve seat. This implies that the housing may be provided with the valve seal as an integral part, such that mounting of the valve may be facilitated. According to yet another embodiment, the valve seal comprises an insert which is mounted in the port.

The valve seal may comprise an axis-symmetrically shaped element surrounding the axis-symmetrical rotational volume of the plug element, which is mounted so that the wall of the plug element is in contact with the valve seal and the plug element rotates in the valve seal. This implies that the valve seal may provide a sealing layer around the entire rotational volume of the plug element. The plug element may rotate within the cylindrical valve seal so that the rigid plug element rotates in contact with the elastomeric valve seal, facilitating the rotation of the obturator. In this embodiment, the valve seal may further comprise opening(s) in the cylindrically shaped element in relation to each opening of the housing. Such an opening in the valve seal may define the valve seat.

The valve seal may be formed from two-component molding. This may facilitate providing an element with desired characteristics.

According to a second aspect of the invention, a method for regulating fluid passage through a valve according to the first aspect is provided. The method comprises: connecting the obturator and the housing to an actuator; and providing a signal to activate the actuator so as to cause the obturator to rotate a given angle in order to regulate the opening of the housing to be regulated. This implies that the controlling of the valve may be automated.

### Brief Description of the Drawings

These and other aspects of the present invention will now be described in more detail, with reference to the appended drawings showing embodiment(s) of the invention.
Fig. 1 is a cross-sectional view of a valve according to a first embodiment of the invention.
Fig. 2 is an exploded view of the valve according to the first embodiment.
Fig. 3 is a perspective view of the valve according to the first embodiment, with a partly cut-away housing.
Fig. 4 is a perspective view of an obturator of the valve according to the first embodiment.
Figs 5a-d are views of an opening a regulated port of the valve according to the first embodiment, illustrating a closed position, an open position and two positions therebetween.
Fig. 6 is a cross-sectional view of a valve according to a second embodiment of the invention.
Fig. 7 is an exploded view of the valve according to the second embodiment.
Fig. 8 is a perspective view of the valve according to the second embodiment, with a partly cut-away housing.
Fig. 9 is a perspective view of an obturator of the valve according to the second embodiment.
Fig. 10 is a flow chart of a method for regulating fluid flow according to the invention.

### Detailed Description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

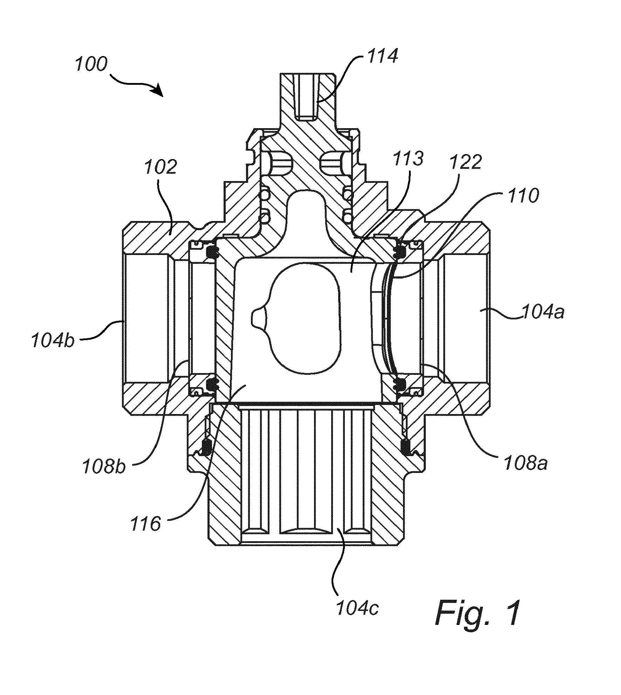

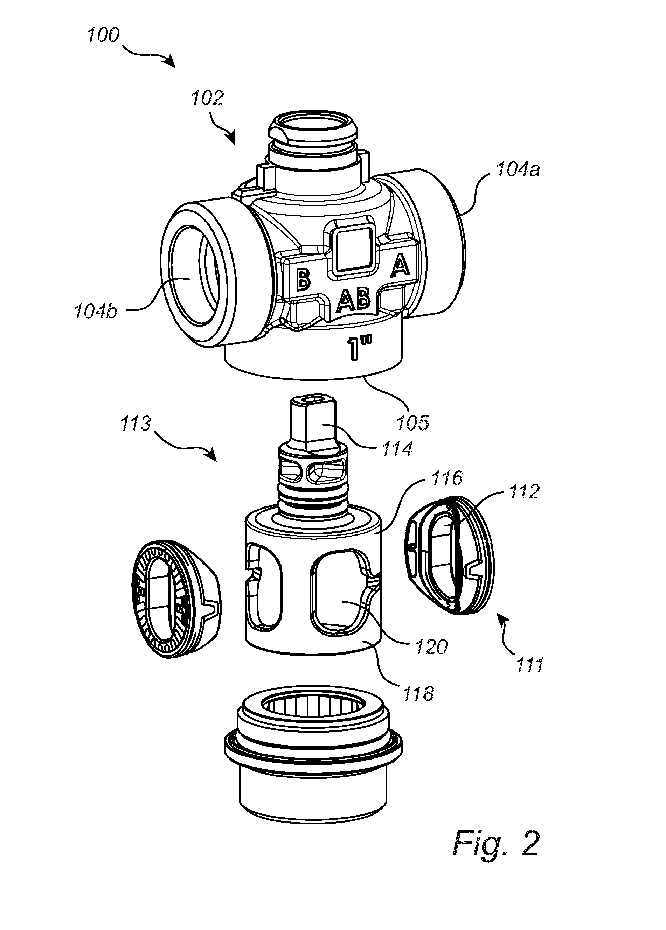

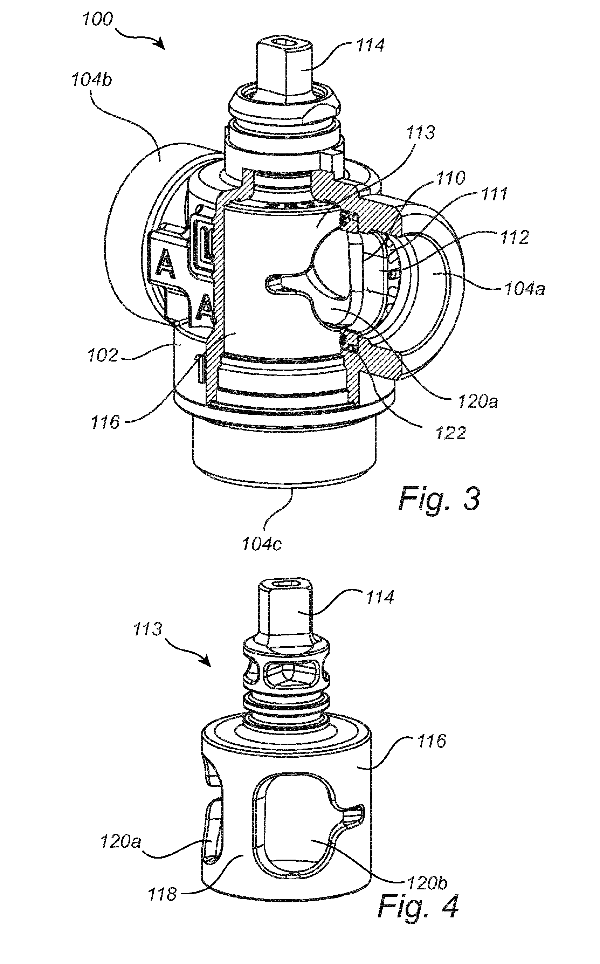

A first embodiment of the invention is shown in Figs. 1-4. Fig. 1 shows a cross-section of a valve 100 as mounted, whereas Fig. 2 shows an exploded view of the valve 100 in order to further illustrate the different parts of the valve 100. Fig. 3 shows a perspective view of the valve 100, with a partly cut-away housing in order to show the inner parts of the valve 100. Fig. 4 is a perspective view of an obturator of the valve 100.

Referring now to Figs 1-4, a valve 100 may comprise an internally hollow housing 102. The housing 102 may allow fluid communication between at least two ports 104a, 104b of the housing 102. The housing 102 may provide a structure, such as inner or outer threads, for connecting pipes, fittings or accessories to the ports 104a, 104b such that inlet and outlet of fluid to and from the housing 102 may be provided. The valve 100 may thus provide a control of fluid flow to and from such pipes connected to the ports 104a, 104b.

The housing 102 may be formed from a rigid material, such as metal, whereby the housing 102 may envelope the inner parts of the valve 100. The housing 102 may have walls defining an inner space 105 and pipe-like structures extending from the inner space 105 forming the ports 104a, 104b.

The housing 102 has an opening 108a, 108b to each port 104a, 104b. The opening 108a, 108b is formed by an inner wall of the housing 102 and providing a connection from the port 104a, 104b to the inner space 105 of the housing 102 between the ports 104a, 104b.

The valve 100 may be formed in order to regulate one or more openings 108a, 108b to ports 104a, 104b. For simplicity and shortness, the following description is made merely with regard to one opening 108a to one port 104a in the housing 102.

The valve 100 comprises a valve seat 110, which defines an edge of the opening 108a. The valve seat 110 may be formed by a structure in the housing 102 that forms the edge of the opening 108a. In this regard, the valve seat 110 may be formed by an inner wall of the housing 102, which may limit fluid flow through the port 104a. This inner wall may extend into the pipe-like shape of the port 104a in order to limit a cross-sectional area of the port 104a that is open to fluid flow.

As shown in Figs 1-4, the valve seat 110 may be formed from an insert 111 that may be inserted and mounted into the port 104a. The insert 111 may be formed by a polymeric material, which allows easy manufacture of the insert 111 by e.g. injection molding. The insert 111 comprises a structure that allows steady mounting of the insert 111 in the port 104a in contact with inner walls of the housing 102. Further, the structure provides walls 112 defining an opening inside the insert 111. These walls 112 therefore define an edge of the opening 108a so as to form the valve seat 110.

The valve 100 may further comprise an obturator 113, which is arranged to be rotated within the inner space 105 of the housing 102. The obturator 113 may comprise a shaft 114 for providing a connection to a handle or to an actuator for driving rotation of the obturator 113. The obturator 113 may further comprise a plug element 116, which is arranged to be mounted in the inner space 105 of the housing 102 and to be rotated therein when the shaft 114 is actuated to rotate the obturator 113. The plug element 116 comprises a cylindrical wall 118 and obturator openings 120a, 120b formed in the cylindrical wall 118. The plug element 116 may further be hollow inside the cylindrical wall 118 in order to allow fluid communication through the obturator openings 120a, 120b into the inner space 105 of the housing 102. In this regard, the plug element 116 may be thin-walled in order to provide a component that requires a small amount of material in production and provides a large space inside the obturator 113.

A cross-sectional area of the opening 108a may be regulated for controlling fluid communication through the valve 100. The fluid flow through the valve 100 may be regulated by means of the obturator 113 being rotated so as to control the relationship of the obturator opening 120a to the valve seat 110. The obturator 113 may thus be rotated between a closed position in which the opening 108a is obstructed by the cylindrical wall 118 of the plug element 116 and a fully open position in which the obturator opening 120a is aligned with the opening 108a to form as large opening as possible between the inner space 105 of the housing 102 and the port 104a.

The obturator 113 may be formed from a rigid material, such as a metal or a polymeric material. In particular, the obturator 113 may be formed from a polymeric material allowing manufacture of the obturator 113 by means of injection molding. The obturator 113 may thus constitute a rigid shape inside the housing 102 in order to provide well-defined obturator openings 120a, 120b that do not substantially change shape depending on applied pressure or fluid flow through the valve 100.

The valve 100 further comprises a valve seal 122, which is arranged between the obturator 113 and the valve seat 110. The valve seal 122 may be mounted inside the housing 102 such that it is in contact with the obturator 113 and with a structure defining the valve seat 110.

The valve seal 122 may be formed from an elastomeric material, such as a rubber material or a thermoplastic elastomer. The valve seal 122 may thus be arranged in contact with the obturator 113 and with the valve seat 110 while allowing the obturator 113 to be rotated in relation to the valve seat 110.

The valve seal 122 may advantageously be formed by two-component molding, wherein the valve seal 122 may be arranged to be integrated with the insert 111 forming the valve seat 110. The insert 111 forming the valve seat 110 may thus be formed in a first step of the molding from a first material providing a rigid shape that defines the valve seat 110. Then, the valve seal 122 may be provided as an elastomeric material in a second step of the molding such that it becomes integral with the insert 111. The two components of the molding may be shaped to provide a large interface surface between the two materials, which facilitates attachment of the valve seal 122 to the insert 111. Further, the two-component molding may form a chemical bond between the materials further strengthening the attachment of the valve seal 122 to the insert 111.

The insert 111 may function as a carrier for the valve seal 122, which may be easily and firmly mounted in the port 104a so as not to be flushed away by fluid flow through the port 104a or brought out of position when the obturator 113 is rotated.

The obturator 113 and the valve seat 110 may, as described above, be formed from rigid materials. Hence, the rotation of the obturator 113 in relation to the valve seat 110 would require a large force and high energy consumption, should the obturator 113 be in direct contact with the valve seat 110. However, if a certain play is allowed between the obturator 113 and the valve seat 110 in order to facilitate rotation of the obturator 113 in relation to the valve seat 110, there may be leakage through the opening 108a in the closed position of the obturator 113. Thanks to the arrangement of the valve seal 122 between the obturator 113 and the valve seat 110, a deformation may occur in the valve seal 122 during rotation of the obturator 113 allowing the obturator 113 to be easily rotated in the housing 102 without demanding tight tolerances in production of the obturator 113 and the housing 102.

Further, the valve seal 122 may both prevent fluid leakage through the valve 100 in the closed position of the obturator 113 and ensure that fluid flow is controlled to pass only through the obturator opening 120a in an open position of the obturator 113.

Furthermore, because of the elastomeric nature of the seal 122, the seal 122 tends to deform when confined inbetween the obturator 113 and the valve seat 110, thus producing low compression forces between the seal 122 and the obturator 113 which lead to low friction which in the end requires low torques in rotating the obturator 113. This is particularly advantageous because it enables limiting the size of the actuator and, at the same time, reducing wear on the seal 122 which results in an extended lifetime of the seal 122.

The valve seal 122 may be formed as an insert, which may be mounted in the port 108a of the housing 102. The insert may be adapted to be connected to the insert 111 forming the valve seat 110. Alternatively, the valve seal 122 may be mounted on the obturator 113. The valve seal 122 may as a further alternative be integrated in the obturator 113, e.g. by providing a further step of injection molding of the valve seal 122 to the forming of the obturator 113. The valve seal 122 may as a yet further alternative be integrated in the structure forming the valve seat 110, e.g. by providing a further step of injection molding of the valve seal 122 to the forming of the insert 111 as described above.

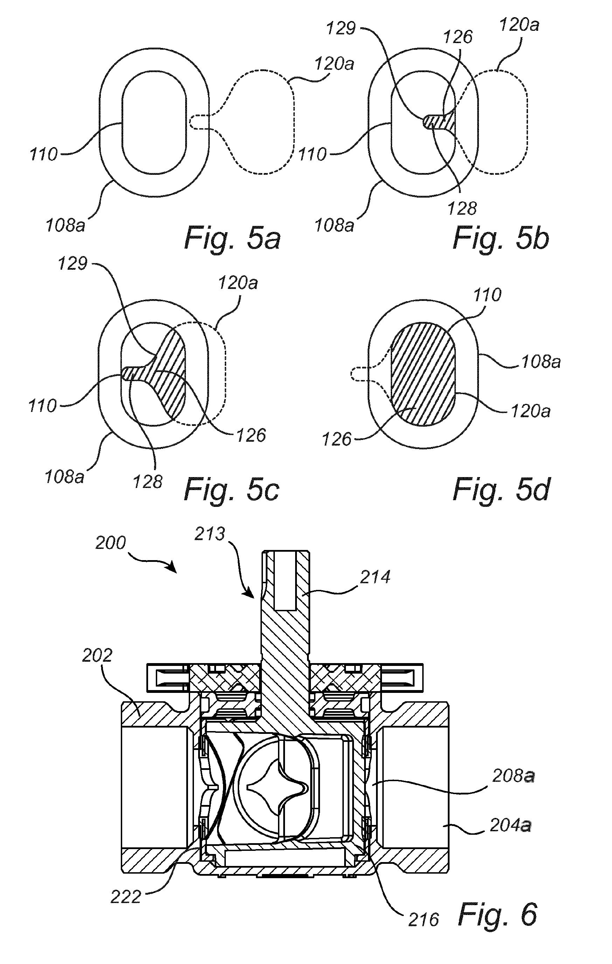

With reference now to Figs. 5a-d, rotation of the obturator 113 of the first embodiment shown in Figs 1-4 between the closed position and the fully open position will be described. Figs. 5a-d show the opening 108a as seen from the port 104a looking into the inner space 105 of the housing 102. Fig. 5a shows a closed position of the obturator 113, and Fig. 5d shows a fully open position of the obturator 113, whereas Figs 5b-c show different positions of the obturator 113 between the closed position and the fully open position.

The valve seat 110 and the obturator opening 120a together define a fluid opening 126, which has a differing size depending on the angular position of the obturator 113. A part of the obturator opening 120a that is outside the fluid opening 126 is shown in dashed lines in Figs 5a-d. The fluid opening is indicated by hatching in Figs 5a-d.

In the closed position shown in Fig. 5a, the cylindrical wall 118 of the plug element 116 is arranged in front of the valve seat 110 so as to obstruct fluid flow through the opening 108a of the housing. The plug element 116 may completely inhibit the fluid flow in the closed position so as to not allow any fluid through the opening 108a of the housing 102. However, the plug element 116 may be shaped to allow an extent of intended leakage through the opening 108a in the closed position. This may for instance be desired to provide some venting through the opening 108a in the closed position. The leakage may be provided by means of the valve seal 122 not completely enclosing the valve seat 110 to provide some leakage between the valve seat 110 and the obturator 113. Alternatively or additionally, the plug element 116 may be provided with one or more separate vent holes that are brought in front of the valve seat 110 in the closed position of the obturator 113.

As the obturator 113 is rotated, the obturator opening 120a is gradually brought in front of the valve seat 110 in order to provide a gradually larger fluid opening 126.

The obturator opening 120a comprises an axially narrow portion 128 extending in a rotational direction of the obturator 113. As the obturator 113 is rotated from the closed position, this narrow portion 128 is first brought in front of the valve seat 110. Hence, as shown in Fig. 5b, the fluid opening 126 may in the initial movement of the obturator 113 from the closed position be formed by the axially narrow portion 128 extending into the valve seat 110. The fluid opening 126 thus comprises an edge profile 129 that forms a leading edge of the fluid opening 126 in the rotational direction of the obturator 113. In this case, the edge profile 129 is defined by the shape of the obturator opening 120a.

The axially narrow portion 128 of the obturator opening 120a allows the size of the fluid opening 126 to be slowly and progressively increased as the obturator 113 is rotated. Hence, the fluid flow through the opening 108a may be accurately controlled for a small flow rate, since the obturator 113 may be rotated a large angle without providing a large increase of the size of the fluid opening 126.

The obturator opening 120a may have a progressively increasing height, i.e. size in a perpendicular direction to the rotational direction of the obturator 113. The progressively increasing height implies that the rate of increase of the size of the fluid opening 126 increases as the obturator 113 is rotated towards the open position, as illustrated in Fig. 5c. The shape of the edge of the obturator opening 120a forming the edge profile 129 may be adapted to the desired regulation characteristics of the opening 108a.

In particular, the obturator opening 120a may be shaped such that a rate of increase of an area of the fluid opening 126 as a function of an angular position of the obturator 113 is monotonically increasing during rotation of the obturator 113 from the closed position towards the fully open position. This implies that fluid flow through the fluid opening 126 is less dependent on the angular position of the obturator 113 than a fluid opening 126 having a linear characteristic. Hence, the fluid flow may be accurately controlled depending on the angular position of the obturator 113.

The obturator 113 may further be rotated such that the edge of the obturator opening 120a that formed the edge profile 129 during opening of the valve 100 is rotated past the valve seat 110. Hence, this part of the obturator opening 120a no longer limits the height of the fluid opening 126 when the obturator 120a is in the fully open position, as illustrated in Fig. 5d. Thus, the fully open position may provide a fluid opening 126 that is as large as the valve seat 110.

According to the described embodiment, the obturator opening 120a may be designed to provide a desired regulation characteristic of the opening 108a. The obturator opening 120a may be shaped such that the rotation of the obturator 113 e.g. provides a slowly increasing size of the fluid opening in respect to the angular position of the obturator 113. While the obturator opening 120a is designed to provide the desired regulation characteristic, the obturator opening 120a need not put any limitation on the size of the fluid opening 126 in the fully open position, since a portion of the obturator opening 120a may have a shape corresponding to or larger than the shape of the valve seat 110. This implies that the valve 100 may be provided with a desired regulation characteristic while providing a large size of the fluid opening 126 in the fully open position.

A person skilled in the art would realize that the shape of the obturator opening 120a providing the edge profile 129 described above is merely an example and that it may be varied according to the desired regulation characteristic.

The desired rate of increase of the fluid opening 126 as a function of the angular position of the obturator 113 may be obtained in a number of different manners by proper designing of the obturator opening 120a and the valve seat 110. Both the valve seat 110 and the obturator opening 120a may be shaped to contribute to a progressively increasing height of the fluid opening 126 with rotation of the obturator 113. In this case, the valve seat 110 and the obturator opening 120a may, but need not, be similarly shaped so that the obturator opening 120a may be brought to be in register with the valve seat 110 in the fully open position. Alternatively, the valve seat 110 may have a substantially constant height, whereas the obturator opening 120a may be shaped to provide a progressively increasing height of the fluid opening 126 as described above with reference to Figs 5a-d. As a further alternative, the obturator opening 120a may have a substantially constant height, whereas the valve seat 110 may be shaped to provide the progressively increasing height of the fluid opening 126.

As described above, an edge profile 129 providing the regulation characteristic may be formed as a leading edge of the fluid opening 126 in the rotational direction of the obturator 113. However, an edge profile 129 may alternatively be formed as a trailing edge of the fluid opening 126 in the rotational direction of the obturator 113. Such an edge profile 129 of the trailing edge may of course also be formed by the mutual shape of the obturator opening 120a and the valve seat 110 or one of the obturator opening 120a and the valve seat 110.

Where the valve seat 110 is shaped in order to provide the desired regulation characteristic, the obturator opening 120a may be smaller than the valve seat 110. Hence, the obturator opening 120a may be rotated to a fully open position, wherein the obturator opening 120a may be aligned with a portion of the valve seat 110 having a shape corresponding to the obturator opening 120a. In such case, the valve seat 110 does not put any limitation on the size of the fluid opening 126 in the fully open position. However, the obturator opening 120a may alternatively be larger than the valve seat 110 so that the fluid opening 126 in the fully open position may be limited by the entire size of the valve seat 110.

The valve 100 may provide any number of ports 104 that have openings 108 that are regulated by the obturator 113. The ports 104 may be placed in a common plane perpendicular to a rotational axis of the obturator 113 such that the rotation of the obturator 113 provides a simultaneous movement of a respective obturator opening 120 in relation to the opening 108 to the port 104.

The valve 100 may further comprise a port 104c that is arranged co-axially with the shaft 114 of the obturator 113. Such a port 104c may also be regulated by means of rotation of the obturator 113. This may be accomplished by means of an obturator opening in the bottom of the obturator 113 or a valve seat in the port 104c being excentrically placed with regard to the rotational axis of the obturator 113. Hence, the rotation of the obturator 113 may regulate an opening of the port 104c.

In one embodiment, the obturator 113 is cup-shaped, having an open end that is co-axial with the shaft 114. The open end may be arranged facing the port 104c, which would thus be non-regulated.

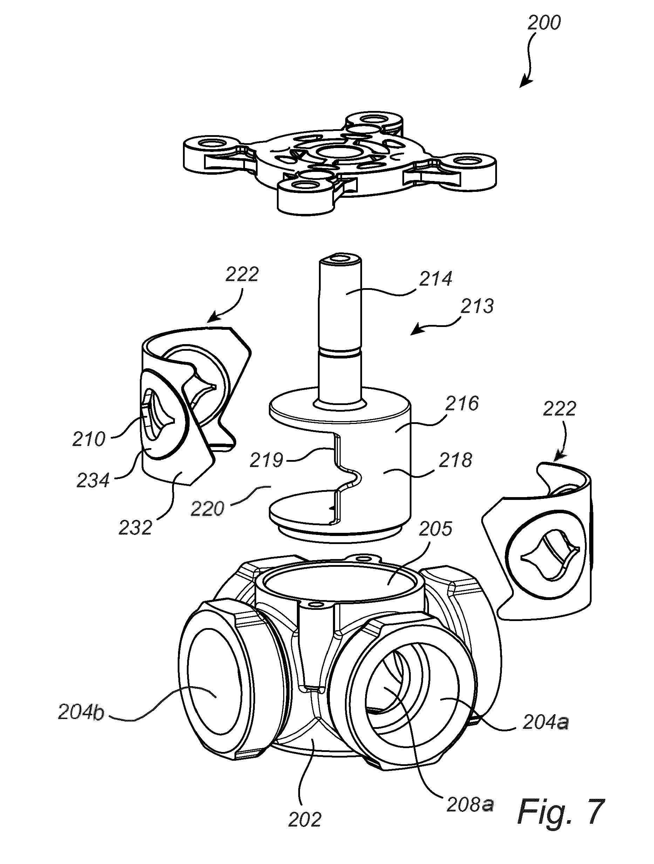

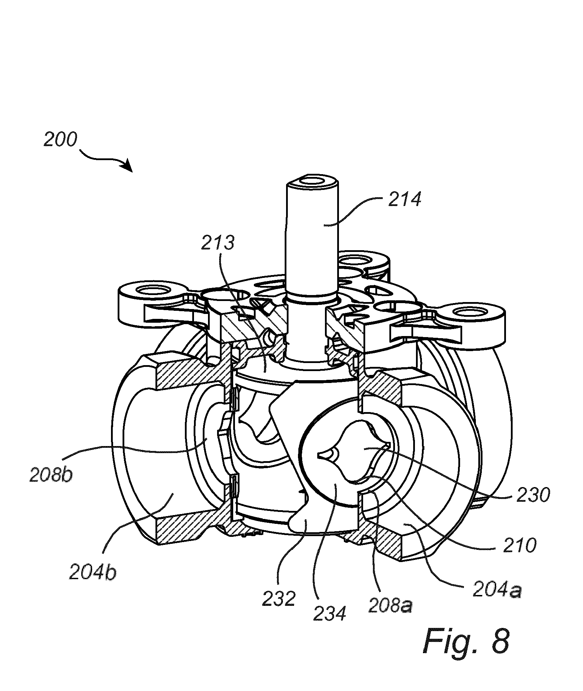

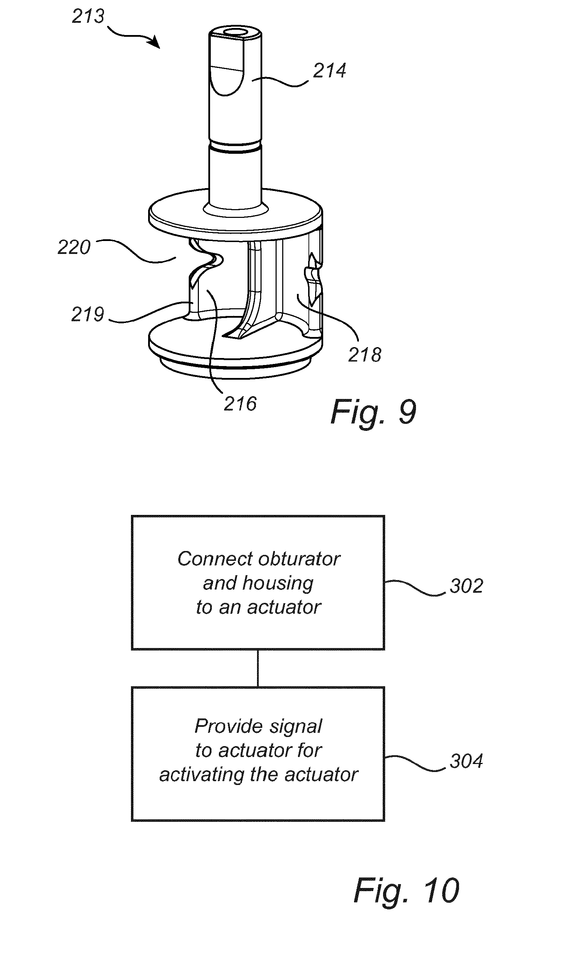

Referring now to Figs. 6-9, a valve 200 according to a second embodiment will be described. Fig. 6 shows a cross-section of the valve 200 as mounted, whereas Fig. 7 shows an exploded view of the valve 200 in order to further illustrate the different parts of the valve 200. Fig. 8 shows a perspective view of the valve 200, with a partly cut-away housing in order to show the inner parts of the valve 200. Fig. 9 is a perspective view of an obturator of the valve 200.

The following description of the valve 200 of the second embodiment will be directed to the differences of this valve 200 to the valve 100 of the first embodiment.

Referring now to Figs 6-9, the valve 200 comprises a housing 202, which may allow fluid communication between ports 204a and 204b of the housing 202. The housing 202 has an opening 208a, 208b to each port 204. The openings 208a, 208b provides a connection from the ports 204a, 204b to the inner space 205 of the housing 202 between the ports 204a, 204b. For simplicity and shortness, the following description is made merely with regard to one opening 208a to one port 204a in the housing 202.

The valve 200 may comprise an obturator 213, which is arranged to be rotated within the inner space 205 of the housing 202 between the ports 204a, 204b. The obturator 213 may comprise a shaft 214 for providing a connection to a handle or to an actuator for driving rotation of the obturator 213. The obturator 213 may further comprise a plug element 216, which is arranged to be mounted in the inner space 205 of the housing 202 and to be rotated therein when the shaft 214 is actuated to rotate the obturator 213.

The plug element 216 comprises a wall 218 that extends along an arc of a circle. The wall 218 may, for instance, extend along an arc spanning 90°. When the obturator 213 is rotated the wall 218 will define a cylindrical rotational volume. The obturator 213 further comprises an obturator opening 220 in the cylindrical rotational volume. The obturator opening 220 is defined by the part of cylindrical rotational volume not covered by the wall 218. Hence, the obturator opening 220 has edges defined by the edges 219 of the wall 218.

The valve 200 may further compries a valve seal 222. The valve seal 222 is formed as a cylindrical element that is arranged surrounding the cylindrical rotational volume of the plug element 216. The valve seal 222 may be formed from an elastomeric material, facilitating rotation of the obturator 213 and forming a seal between the obturator 213 and a port 204a.

The valve seal 222 may further comprise an opening 230 in the valve seal 222 in correspondence to the opening 208a to the port 204a. The edge of the opening 230 may thus constitute the valve seat 210.

The valve seal 222 may comprise a first portion 232 providing the cylindrical structure of the valve seal 222. The valve seal 222 may further comprise a second portion 234 that may be integrated in the first portion 232 and surrounds the opening 230 in the valve seal 222 so as to define the valve seat 210. The first portion 232 may function as a carrier for the second portion 234 that may provide the sealing function of the valve seal 222. Hence, the first portion 232 may be arranged from an elastomeric material or a rigid material and provide an insert that may be easily and firmly mounted in the housing 202. The second portion 234 may be formed from an elastomeric material and may provide the sealing functionality between the obturator 213 and the valve seat 210. The valve seal 222 may e.g. be manufactured by two or more steps of injection molding so as to integrate the second portion 234 with the first portion 232. Hence, when mounted, the first portion 232 ensures that the second portion 234 proving the sealing functionality is not flushed away by fluid flow through the port 204 or brought out of position when the obturator 213 is rotated.

The valve seal 222 could alternatively be formed as a separate component for each port 204 having an opening 208 that is to be regulated. The valve seal may thus comprise a structure that may be arranged between a top portion of the obturator 213 and the housing 202 and the bottom portion of the obturator 213 and the housing 202. The top portion and bottom portion of the obturator 213 may be circular, such that the structure of the valve seal may be constantly in contact with the obturator 213 even if the wall 218 of the obturator 213 is not in front of the port 204. Thus, the valve seal may be held in position by its contact with the obturator 213 and the housing 202, and the valve seal may further provide a structure surrounding the opening 208 to be regulated so as to define the valve seat 210.

The obturator 213 may be rotated between a closed position in which the opening 208a is obstructed by the wall 218 of the plug element 216 and a fully open position in which the obturator opening 220 is aligned with the opening 208a to form as large opening as possible between the inner space 205 of the housing 202 and the port 204a.

The edges 219 of the wall 218 and the valve seat 210 may be designed to provide desired regulation characteristics of the valve 200 in a similar manner as described above with reference to Figs. 5a-d for the first embodiment. The valve seat 210 and the obturator opening 220 may thus together define a fluid opening 126, which has a differing size depending on the angular position of the obturator 213.

Further, an edge profile of the fluid opening 126 may be formed by the mutual shape of the obturator opening 220 and the valve seat 210 or by the shape of one of the obturator opening 220 and the valve seat 210. Also, the edge profile providing the regulation characteristic may be formed as a leading edge and/or a trailing edge of the fluid opening 126 in the rotational direction of the obturator 213.

Since the plug element 216 comprises a wall 218 that only extends along an arc of a circle, the fluid opening 126 will in the fully open position merely be limited by the valve seat 210. The obturator 213 may continue to be rotated a large angle while maintaining a fully open position providing as large fluid opening 126 as possible.

Referring now to Fig. 10, a method for regulating fluid passage through a valve will be described. The obturator 113, 213 and the housing 102, 202 may be connected, step 302, to an actuator via the shaft 114, 214. Hence, the actuator may be arranged to cause rotation of the obturator 113, 213 in relation to the housing 102, 202. The actuator may be provided, step 304, with a signal for activating the actuator. The position of the obturator 113, 213 may thus be controlled by means of the actuator driving the shaft 114, 214 in order to rotate the obturator 113, 213 to the desired position.

The actuator may be driven by an electrical signal, such as an electric motor. However, the actuator may alternatively be driven by means of a pneumatical, mechanical, or thermal signal, or any other signal for activating the actuator so as to drive the shaft 114, 214.

The actuator may drive the obturator 113, 213 from a closed position to a fully open position. However, depending on the desired fluid flow through the valve, the actuator may drive the obturator 113, 213 to position the obturator 113, 213 in any position inbetween the closed and fully open position providing a specific size of the fluid opening 126.

The fluid flow through the valve 100, 200 may thus be controlled in an accurate manner. A desired value of the fluid flow may be set or received and the actuator may then be controlled to alter fluid flow through the valve 100, 200 to the set value. This alteration of fluid flow through the fluid opening 116, 216 may correspond to a small change in angular position of the obturator 113, 213. Hence, the obturator 113, 213 is often not rotated from a closed position to a fully open position, but rather a change in angular rotation therebetween is made. The actuator may cause the obturator 113, 213 to be rotated until the desired fluid flow is reached, possibly including rotating the obturator 113, 213 back and forth around the desired angle until the fluid flow corresponds to the set value. With the design of the valve 100, 200 having a regulation characteristic that provides accurate control at least for low fluid flows, the actuator may be able to settle the angular position of the obturator 113, 213 at a position that corresponds to the desired fluid flow avoiding fluctuations in fluid flow rate that may lead to instability of the regulating system where the valve object of the invention is inserted.

The obturator 113, 213 will maintain its angular position once the actuator has driven the obturator 113, 213 to the desired position. Hence, there is no need to provide external energy for maintaining a position of the obturator 113, 213. This implies that the energy consumption of the valve 100 is low and external energy is only needed when the fluid flow is to be altered.

The valve 100, 200 as described above also enables an energy-efficient system. For instance, the valve 100, 200 may be arranged to control flow of hot water to a shower and to radiators in a building. During summertime, there may be no need to provide hot water to the radiators. By means of the valve 100, 200, an opening to a port connected to the radiators may be obstructed so that no unnecessary leakage occurs to the radiators, saving energy in the system as a whole.

The person skilled in the art realizes that the present invention by no means is limited to the preferred embodiments described above. On the contrary, many modifications and variations are possible within the scope of the appended claims. For example, the valve seal of the second embodiment may be used with an obturator as described in the first embodiment.

Further, although an obturator has been described providing a cylindrical rotational volume of the plug element, it should be realized that the rotational volume need not be cylindrical. The obturator may provide a rotational axis, around which rotation of the obturator occurs. The plug element may then form any rotational volume that is axis-symmetrical around the rotational axis of the obturator. The valve may still comprise a valve seal that may provide a proper seal between the obturator and the valve seat. Further, the obturator opening and the valve seat may still be shaped so as to provide the desired regulation characteristic of the fluid opening.

It should also be emphasized that the valve may comprise any number of ports and that the valve may be designed to provide regulation of the fluid flow through any number of the ports provided. For instance, with the valve as described in the second embodiment, the obturator may be rotated back and forth in a fashion so that the wall never is brought in front of one or more of the ports. Hence, these ports may be non-regulated and the obturator may be rotated so as to control the fluid flow through the other ports that are in communication with the non-regulated ports.

## Claims

1. A valve, comprising:
an internally hollow housing (102; 202) allowing fluid communication between at least two ports (104a, 104b; 204a, 204b) of the housing (102; 202), wherein the housing (102; 202) has an opening (108a, 108b; 208a, 208b) to each port (104a, 104b; 204a, 204b) and wherein the cross-sectional area of at least one opening (108a, 108b; 208a, 208b) is arranged to be regulated for controlling fluid communication through the valve;
a valve seat (110; 210), which defines an edge of an opening (108a, 108b; 208a, 208b) of the housing (102; 202) to be regulated;
an obturator (113; 213), which is formed from a rigid material and which comprises a plug element (116; 216) having a wall (118; 218), wherein the obturator (113; 213) with the plug element (116; 216) is rotatable in relation to the opening (108a, 108b; 208a, 208b) of the housing (102; 202) to be regulated so that the wall (118; 218) of the plug element (116; 216) defines an axis-symmetrical rotational volume as the obturator (113; 213) is rotated and at least one obturator opening (120a, 120b; 220) which is rotated in relation to the opening (108a, 108b; 208a, 208b) of the housing (102; 202) to be regulated as the obturator (113; 213) is rotated; and
a valve seal (122; 234), which is arranged between the valve seat (110; 210) and the obturator (113; 213) in contact with the valve seat (110; 210) and with the obturator (113; 213), wherein the valve seal (122; 234) is formed from an elastomeric material;
wherein the obturator opening (120a, 120b; 220) and the valve seat (110; 210) together form a fluid opening (126) and the obturator (113; 213) is rotatable and placeable in any position between a fully open position in which a largest fluid opening (126) is formed and a closed position in which the opening (108a, 108b; 208a, 208b) of the housing (102; 202) to be regulated is obstructed by the wall (118; 218) of the plug element (116; 216), and wherein the valve seat (110; 210) and the obturator opening (120a, 120b; 220) are shaped such that a regulation characteristic of the fluid opening (126) is obtained, wherein fluid flow through the fluid opening (126) is less dependent of angular position of the obturator (113; 213) during initial rotation of the obturator (113; 213) from the closed position than a linear characteristic fluid opening.

2. The valve according to claim 1, wherein the obturator opening (120a, 120b; 220) and the valve seat (110; 210) are shaped such that a rate of increase of an area of the fluid opening (126) as a function of an angular position of the obturator (113; 213) is monotonically increasing during initial rotation of the obturator (113; 213) from the closed position.

3. The valve according to claim 2, wherein initial rotation of the obturator (113; 213) constitutes an angular rotation through approximately half an angle between the closed position and the fully open position of the obturator (113; 213).

4. The valve according to claim 3, wherein an edge of the obturator opening (120a, 120b; 220) is shaped to provide the regulation characteristic of the fluid opening (126).

5. The valve according to claim 3, wherein the valve seat (110; 210) is shaped to provide the regulation characteristic of the fluid opening (126).

6. The valve according to any one of the preceding claims, wherein the plug element (116; 216) defines a cylindrical rotational volume as the obturator (113; 213) is rotated.

7. The valve according to any one of the preceding claims, wherein the valve seat (110; 210) is formed by an insert (111; 222) in the port (104a, 104b; 204a, 204b).

8. The valve according to any one of claims 1-6, wherein the valve seat (110; 210) is formed by an inner wall in the port (104a, 104b; 234).

9. The valve according to any one of claims 1-6, wherein the valve seat (110; 210) is defined by an edge of the valve seal (122; 234).

10. The valve according to any one claims 1-6 or 9, wherein the valve seal (122; 222) is arranged to be integrated in the obturator (113; 213).

11. The valve according to any one of claims 1-6 or 9, wherein the valve seal (122; 234) is arranged to be integrated in a structure of the housing (102; 202) forming the valve seat (110; 210).

12. The valve according to any one of claims 1-7 or 9, wherein the valve seal (122; 234) comprises an insert (111; 222) which is mounted in the port (104a, 104b; 204a, 204b).

13. The valve according to any one of claims 1-6, wherein the valve seal (122; 234) comprises an axis-symmetrically shaped element surrounding the axis-symmetrical rotational volume of the plug element (116; 216), which is mounted so that the wall (118; 218) of the plug element (116; 216) is in contact with the valve seal (122; 234) and the plug element (116; 216) rotates in the valve seal (122; 234).

14. The valve according to any one of the preceding claims, wherein the valve seal (122; 222) is formed from two-component molding.

15. A method for regulating fluid passage through a valve according to any one of claims 1-14, comprising:
connecting (302) the obturator (113; 213) and the housing (102; 202) to an actuator; and
providing (304) a signal to activate the actuator so as to cause the obturator (113; 213) to rotate a given angle in order to regulate the opening (108a, 108b; 208a, 208b) of the housing (102; 202) to be regulated.
